# EUROPÄISCHE PATENTSCHRIFT

(11) **EP 1 428 715 B1**
(45) Veröffentlichungstag und Bekanntmachung des Hinweises auf die Patenterteilung: **27.09.2006**
(21) Anmeldenummer: 03024628.4
(22) Anmeldetag: 27.10.2003
(51) Int. Cl.: B60K 26/02, G05G 1/14

(54) **Fahrpedalmodul**
Accelerator pedal module
Module de pédale d'accélérateur

(30) Priorität: 13.12.2002 DE 10258286
(43) Veröffentlichungstag der Anmeldung: 16.06.2004
(73) Patentinhaber: ROBERT BOSCH GMBH, 70442 Stuttgart (DE)
(72) Erfinder: Caba, Radek, 38232 Velesin (CZ); Rossmueller, Josef, 39811 Protivin (CZ); Cizek, Vaclav, 39001 Tabor (CZ); Kovar, Petr, 32600 Plzen (CZ); Solta, Rostislav, 46331 Chrastava (CZ)

(56) Entgegenhaltungen:
- EP-A- 0 515 331
- EP-A- 1 428 714
- DE-A- 10 042 549
- DE-A- 19 536 699
- FR-A- 2 796 174

## Beschreibung

### Stand der Technik

Die Erfindung geht aus von einem Fahrpedalmodul zum Steuern der Leistung einer Antriebsmaschine, insbesondere einer Brennkraftmaschine eines Fahrzeugs, mit einem mittels einer Schwenkverbindung an einem Lagerbock um eine Schwenkachse drehbar gehaltenen Pedalhebel, der mit wenigstens einem Pedalhebelanschlag gegen einen zugeordneten Lagerbockanschlag anschlagbar ist, gemäß dem Oberbegriff von Anspruch 1. Ein solches Fahrpedalmodul ist in der DE 195 36 699 A1 beschrieben. Die Nachteile des Standes der Technik werden durch ein Fahrpedalmodul gemäß Anspruch 1 überwunden.

### Vorteile der Erfindung

Erfindungsgemäß wird vorgeschlagen, dass im Bereich des Pedalhebelanschlags und/oder des Lagerbockanschlags derartige Elastizitäten vorhanden sind, dass während einer um die Schwenkachse ausgeführten Relativdrehbewegung zwischen dem Pedalhebel und dem Lagerbock zur Herstellung der Schwenkverbindung der Pedalhebelanschlag am Lagerbockanschlag bedingt durch elastische Verformungen vorbeigleitet und ihn nach Rückfederung hintergreift. Wie bei einer Schnappverbindung gleiten die einander zugeordneten Anschläge am Lagerbock und am Pedalhebel unter Druck aneinander vorbei, um nach der Rückfederung der elastischen Bereiche ein Lösen des Pedalhebels vom Lagerbock zu verhindern. Neben Ihrer Funktion beispielsweise als Leerlaufanschlag wirken die Anschläge am Pedalhebel und am Lagerbock daher gleichzeitig als Schnappverschluss, welcher einen Teil der Schwenkverbindung bildet und diese sichert. Die Schwenkverbindung zwischen dem Pedalhebel und dem Lagerbock kann dann durch lediglich eine einzige Drehbewegung hergestellt werden, wobei unter dem Begriff Schwenkverbindung eine im wesentlichen unauflösbare und nur einen Drehfreiheitsgrad zulassende Verbindung verstanden wird.

Durch die in den Unteransprüchen aufgeführten Maßnahmen sind vorteilhafte Weiterbildungen und Verbesserungen der im Patentanspruch 1 angegebenen Erfindung möglich.

Gemäß einem in der bereits genannten DE 195 36 699 A1 beschriebenen Ausführungsbeispiel müssen zwei jeweils eine Durchgangsbohrung aufweisende elastische Wangen des Lagerbocks seitlich aufgebogen werden, um einen Lagerzapfen des Pedalhebels in Durchgangslöcher der Wangen einführen zu können. Diese Elastizität im Bereich der Lagerflächen bedingt eine nachgiebige Lagerung des Pedalhebels am Lagerbock. Da am Fahrpedalmodul ein Sensor angebracht ist, welcher im Rahmen der Verwirklichung eines elektrischen Fahrpedals ein von dem Betätigungsweg des Pedalhebels abhängiges elektrisches Signal an ein zentrales Motorsteuergerät liefert, wirkt sich eine solche nachgiebige Lagerung negativ auf die Meßgenauigkeit aus. In bevorzugter Weise sind deshalb die den Schnappverschluss ermöglichenden elastischen Bereiche des Fahrpedalmoduls deshalb entfernt von den Lagerflächen der Schwenkverbindung vorgesehen, so dass die Lagerflächen auf eine hohe, für die Meßgenauigkeit günstige Steifigkeit ausgelegt werden können.

Die während des Vorbeigleitens der einander zugeordneten Anschläge entstehenden elastischen Verformungen können Kräfte hervorrufen, welche die relative Lage zwischen Pedalhebel und Lagerbock während der Montage ändern. Besonders bevorzugt ist deshalb der Pedalhebel an dem Lagerbock mittels der Lagerflächen abstützbar, bevor der Pedalanschlag an dem Lagerbockanschlag vorbeigleitet. Dann ist der Pedalhebel am Lagerbock vor der Fertigstellung des Schnappverschlusses in definierter Weise geführt, was die Montage wesentlich erleichtert.

Gemäß einer ersten Ausführungsform beinhalten die Lagerflächen der Schwenkverbindung wenigstens einen dem Pedalhebel angeformten und sich über einen Teilkreis erstreckenden Ringabschnitt, welcher in eine dem Lagerbock angeformte und sich ebenfalls über einen Teilkreis erstreckende Ringnut einführbar ist. Hierdurch ist eine besonders steife, schienenartige Führung des Pedalshebels am Lagerbock gegeben, welche einerseits die Montage des Schnappverschlusses erleichtert und andererseits eine besonders steife Drehlagerung des Pedalhebels am Lagerbock bedingt.

Gemäß einer weiteren Ausführungsform weisen die Lagerflächen der Schwenkverbindung einen mit der Schwenkachse koaxialen, dem Lagerbock zugeordneten Zapfen auf, auf welchen eine teilzylindrische Lagerschale des Pedalshebels aufsetzbar ist. Dann ist die Lagerschale des Pedalhebels während der den Schnappverschluss hervorrufenden Relativdrehbewegung am Zapfen des Lagerbocks geführt, was die Montage aus den oben angeführten Gründen wesentlich erleichtert.

Gemäß einer weiteren Maßnahme weist der Lagerbock vorzugsweise zwei mit zueinander weisenden Lagerbockanschlägen versehene Wangen auf, zwischen welchen der Pedalhebel geführt ist und welche,mit zwei zueinander weisenden, vorspringenden Lagerbockanschlägen versehen sind. Die symmetrischen Anschläge verhindern in vorteilhafter Weise das Entstehen eines Kippmoments, wenn der Pedalhebel anschlägt.

Eine Weiterbildung sieht vor, dass die Wangen des Lagerbocks im Bereich der Lagerbockanschläge eine seitliche Elastizität aufweisen. Die Elastizität der beiden Wangen kann beispielsweise durch eine gezielte lokale Reduzierung der Wandstärke im Bereich der Lagerbockanschläge erhöht werden, so dass die elastischen Verformungen auf diesen Bereich beschränkt bleiben, um das Aneinandervorbeigleiten der zugeordneten Anschläge zu ermöglichen. Hingegen sollten die Wangen im Bereich der Lagerflächen der Schwenkverbindung zur Ausbildung einer steifen Lagerung wenig nachgiebig ausgeführt sein.

Gemäß einer weiteren Maßnahme weisen der Pedalhebelanschlag und der Lagerbockanschlag eine Geometrie auf, welche eine Auflösung der fertig gestellten Schwenkverbindung verhindert. Dies ist vorzugsweise dadurch realisiert, dass zumindest der Lagerbockanschlag wenigstens einen in Richtung der Schwenkachse vorspringenden Keil mit einer in eine Stufe mündenden Keilfläche aufweist, wobei die Keilfläche in Richtung der zur Herstellung der Schwenkverbindung vorgesehenen Relativdrehbewegung und die Stufe in Gegenrichtung wirksam ist. Der Pedalanschlag kann durch wenigstens eine der Stufe des Keils zugeordnete Anschlagkante gebildet werden, welche einen in Richtung der Schwenkachse eingezogenen Bereich begrenzt, in welchem der Keil nach Fertigstellung der Schwenkverbindung mit Spiel geführt ist. Der Keil und der eingezogene Bereich können dem Lagerbock bzw. dem Pedalhebel jeweils einstückig angeformt sein, beispielsweise im Spritzgußverfahren.

Weitere vorteilhafte Ausgestaltungen und Weiterbildungen der Erfindung sind in den restlichen Unteransprüchen beschrieben.

### Zeichnungen

Ausführungsbeispiele der Erfindung sind in der Zeichnung dargestellt und in der nachfolgenden Beschreibung näher erläutert. In der Zeichnung zeigt
- Fig.1: eine perspektivische Ansicht eines Pedalhebel und eines Lagerbocks als wesentliche Teile einer bevorzugten Ausführungsform eines erfindungsgemäßen Fahrpedalmoduls;
- Fig.2: eine perspektivische Ansicht des am Lagerbock montierten Pedalhebels, wobei der Lagerbock entlang der Linie II-II von Fig.1 aufgeschnitten ist;
- Fig.3: eine Schnittdarstellung des Fahrpedalmoduls entlang der Linie III-III von Fig.2;
- Fig.4: eine Explosionszeichnung einer weiteren Ausführungsform des Fahrpedalmoduls;
- Fig.5: eine Teilschnittdarstellung entlang der Linie V - V von Fig.4;
- Fig.6: eine Teilschnittdarstellung entlang der Linie VI - VI von Fig.4;
- Fig.7: einen Längsschnitt durch das Fahrpedalmodul von Fig.4.

### Beschreibung der Ausführungsbeispiele

Das erfindungsgemäße Fahrpedalmodul wird zur Steuerung einer Antriebsmaschine, vorzugsweise einer Brennkraftmaschine eines Kraftfahrzeugs verwendet, deren Drosselklappe von einem Stellmotor verstellbar ist. In diesem Fall dient das Fahrpedalmodul zur Erzeugung von elektrischen Signalen für den Stellmotor, um abhängig von der Stellung eines Fahrpedals des Fahrpedalmoduls die Leistung der Brennkraftmaschine zu steuern. Die Antriebsmaschine kann aber auch beispielsweise ein durch elektrische Signale angesteuerter Elektromotor sein.

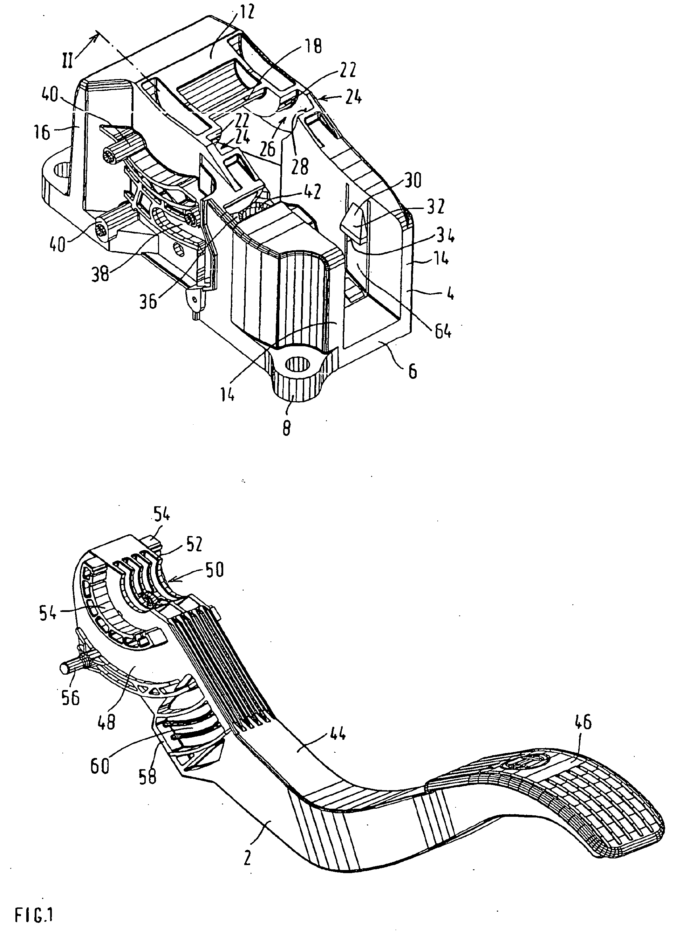

Das Fahrpedalmodul 1 wird von Fahrer des Kraftfahrzeugs fußbetätigt und beinhaltet gemäß Fig.1 einen Pedalhebel 2, welcher vorzugsweise das unmittelbar vom Fahrerfuß betätigte Gaspedal darstellt. Alternativ kann es sich bei dem Pedalhebel 2 um einen Hebel einer weitere Hebel enthaltenden Hebel- oder Gestängemechanik handeln, welcher mit dem Gaspedal gekoppelt ist. Weiterhin umfasst das Fahrpedalmodul 1 einen Lagerbock 4 als Haltestruktur für den Pedalhebel 2, welcher vorzugsweise unmittelbar im Fußbereich des Fahrers mittels von einer Bodenplatte 6 des Lagerbocks seitlich hervorragenden Schraubaugen 8 befestigbar ist. Als weitere Elemente beinhaltet das Fahrpedalmodul 1 einen aus Gründen der Übersichtlichkeit in Fig.1 nicht dargestellten Sensor und Rückstellfederelemente. Darüber hinaus kann das Fahrpedalmodul 1 zusätzlich mit einer Kick-Down-Mechanik für ein automatisches Getriebe des Kraftfahrzeugs versehen sein, welche beispielsweise in der DE 195 36 699 A1 beschrieben ist.

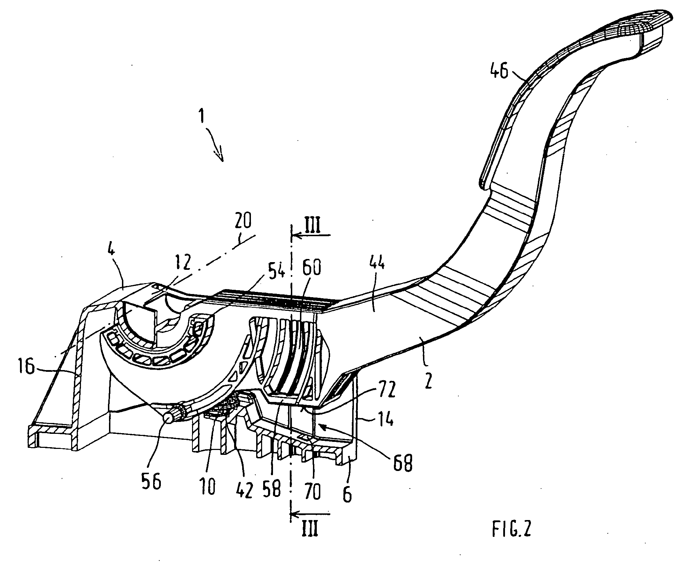

Wie aus dem oberen Teil von Fig.1 hervorgeht, beinhaltet der Lagerbock 4 zwei mit Querabstand parallel zueinander angeordnete, von der Bodenplatte 6 senkrecht wegragende und an den von der Bodenplatte 6 weg weisenden Enden mit einem Quersteg 12 miteinander verbundene Wangen 14. Die Wangen 14 stehen zusätzlich mittels einer ebenfalls senkrecht von der Bodenplatte 6 weg ragenden Stirnplatte 16 miteinander in Verbindung. Der Quersteg 12 trägt an seiner zur Bodenplatte 6 weisenden, unteren Fläche eine zentrale Lagerfläche 18 in Form einer etwa halben Zylinderfläche eines gedachten Zylinders, dessen Mittelachse einer in Fig.2 gezeigten Schwenkachse 20 einer Schwenkverbindung zwischen dem Pedalhebel 2 und dem Lagerbock 4 entspricht. Wangenseitig weist der Quersteg 12 außerdem zwei gegenüber der zentralen Lagerfläche 18 im Durchmesser vergrößerte und ebenfalls etwa durch halbe Zylinderflächen gebildete Lagerflächen 22 auf. Die Lagerflächen 18, 22 weisen allesamt zur Bodenplatte 6 des Lagerbocks 4. Quer zur Schwenkachse 20, d.h. in Längsrichtung des Lagerbocks 4 gesehen, ist jeweils einem Rand der wangenseitigen Lagerflächen 22 ein Einführungsschlitz 24 zu je einer Ringnut 26 nebengeordnet, welche einerseits durch die durchmessergrößere Lagerfläche 22 und andererseits durch eine weitere gegenüberliegende kreisbogenförmige und mit der Schwenkachse 20 koaxiale Lagerfläche 28 begrenzt ist.

In einem entfernt von den Lagerflächen 18, 22, 28 gelegenen Bereich der Wangen 14 sind zwei sich gegenüber liegende, zueinander weisende, in Richtung der Schwenkachse 20 vorspringende Lagerbockanschläge angeordnet, welche vorzugsweise als Keile 30 mit bezüglich zur Schwenkachse 20 etwa in radialer Richtung verlaufenden Keilflächen 32, welche an ihrem maximal vorspringenden Keil-ende jeweils eine vorspringende Stufe 34 in Bezug zur restlichen Wangenfläche bilden. Aufgrund der perspektivischen Ansicht ist in Fig.1 lediglich einer der Keile 30 sichtbar. In einer der Wangen 14 des Lagerbocks ist darüber hinaus ein weiterer Einführungsschlitz 36 vorhanden, welcher in eine teilkreisbogenförmige Durchbrechung 38 der entsprechenden Wange 14 mündet. Benachbart zu der teilkreisförmigen Durchbrechung 38 der Wange 14 ist eine Aufnahme für ein Sensorgehäuse des Sensors vorzugsweise in Form von senkrecht nach außen ragenden Zapfen 40 angeordnet, welche zentrale Sackbohrungen zur Aufnahme von Schrauben aufweisen.

Wie am besten anhand von Fig.2 zu sehen ist, weist die Bodenplatte 6 in einem in Längsrichtung des Lagerbocks 4 gesehen zwischen der Schwenkachse 20 und den Lagerbockanschlägen 30 angeordneten Bereich eine Aufnahme für die Rückstellfederelemente 10 auf, welche vorzugsweise als Zapfen 42 ausgeführt ist. Die beispielsweise als ineinander gesteckte Schraubenfedern ausgebildeten Rückstellfederelemente sind auf den Zapfen 42 aufgesteckt und an ihm zentriert. Der Lagerbock 4 ist vorzugsweise als einstückiger Spritzgußformling aus Kunststoff ausgeführt, d.h., dass sämtliche bisher beschriebenen Elemente wie die Bodenplatte 6, die Stirnplatte 16, die Wangen 14, der Quersteg 12 und insbesondere die Lagerbockanschläge 30 zusammen ein einstückiges Bauteil bilden.

Der im unteren Teil von Fig.1 gezeigte Pedalhebel 2 hat einen Hebelkörper 44, der an seinem freien Ende eine Fußplatte 46 und an einem Pedalhebelkopf 48 mit den Lagerflächen 18, 22, 28 des Lagerbocks 4 zusammenwirkende Lagerflächen, welche eine zentrale, konkave Lagerfläche 50 beinhalten. Diese wird vorzugsweise durch eine Anzahl mit Querabstand parallel zueinander angeordnete Rippen 52 gebildet, deren Stirnflächen zusammen etwa eine halbe Zylinderfläche mit einem Durchmesser bilden, der etwa dem Durchmesser der zentralen Lagerfläche 18 des Lagerbocks 4 entspricht. Die zentrale Lagerfläche 50 des Pedalhebels 2 ist koaxialen, von beiden Seitenflächen des Hebelkörpers 44 weg ragenden und sich jeweils etwa über einen Halbkreisbogen erstreckenden Ringabschnitten 54 zwischengeordnet, deren radial innere Umfangsflächen Lagerflächen bilden. Die Ringabschnitte 54 weisen in einer in Bezug zur Schwenkachse 20 radialen Richtung eine Dicke auf, welche der lichten Weite einer Ringnut 26 des Lagerbocks 4 entspricht.

Weiterhin ragt von dem Pedalhebelkopf 48 ein zapfenförmiger Mitnehmer 56 quer nach außen weg, welcher beispielsweise in einen nicht gezeigten Drehhebel eines Schleifrings eines in dem Sensorgehäuse gehaltenen Potentiometers eingreift, das im vorliegenden Fall beispielsweise den Sensor bildet. In einem den Lagerflächen 50, 54 und der Fußplatte 46 zwischengeordneten Bereich des Hebelkörpers ist an beiden Seitenflächen je ein Pedalhebelanschlag vorhanden, vorzugsweise in Form einer Anschlagkante 58, welche einen in Richtung der Schwenkachse 20 eingezogenen Bereich 60 begrenzt. Der eingezogene Bereich 60 hat ungefähr eine Längserstreckung, welche dem Betätigungsweg des Pedalhebels 2 entspricht und verläuft annähernd radial in Bezug zur Schwenkachse 20. Die Breite des Pedalhebels 2 in der Umgebung des eingezogenen Bereichs 60 entspricht in etwa dem Querabstand der beiden Wangen 14 des Lagerbocks 4. Der Pedalhebel 2 ist vorzugsweise als einstückiger Spritzgußformling aus Kunststoff ausgeführt, d.h., dass sämtliche bisher beschriebenen Elemente wie die Fußplatte 46, die Lagerflächen 50, 54, der Mitnehmer 56, die eingezogenen Bereiche 60 und insbesondere die Pedalhebelanschläge 58 zusammen ein einstükkiges Bauteil bilden.

Zur Herstellung der Schwenkverbindung zwischen dem Pedalhebel 2 und dem Lagerbock 4 werden die am Pedalhebelkopf 48 vorhandenen Ringabschnitte 54 über die Einführungsschlitze 24 in die zugeordneten Ringnuten 26 und der Mitnehmer 56 in den weiteren Einführungsschlitz 36 eingeführt. Dann wird der Pedalhebel 2 relativ zum Lagerbock 4, oder auch umgekehrt, um die Schwenkachse 20 ein Stück weit verdreht, wodurch sowohl die zentralen wie auch die äußeren Lagerflächen 18 bzw. 50 und 22, 28 bzw. 54 am Pedalhebel 2 und am Lagerbock 4 sowie die Seitenflächen am Pedalhebel 2 und an den Wangen 14 des Lagerbocks 4 aneinander zur gleitenden Anlage kommen. Hierdurch entsteht ein Formschluß, welcher lediglich eine Drehung des Pedalhebels 2 relativ zum Lagerbock 4 um die Schwenkachse 20 erlaubt, wobei der Pedalhebel 2 insbesondere aufgrund der beiden Ringabschnitt- Ringnut-Paarungen 26, 54 zwangsgeführt und abgestützt ist. Zuvor werden die Rückstellfederelemente 10 einerseits auf den Zapfen 42 in der Bodenplatte 6 des Lagerbocks 4 und andererseits auf einen in Montageposition gegenüberliegenden, in den Figuren nicht sichtbaren Zapfen des Pedalhebels 2 aufgesetzt.

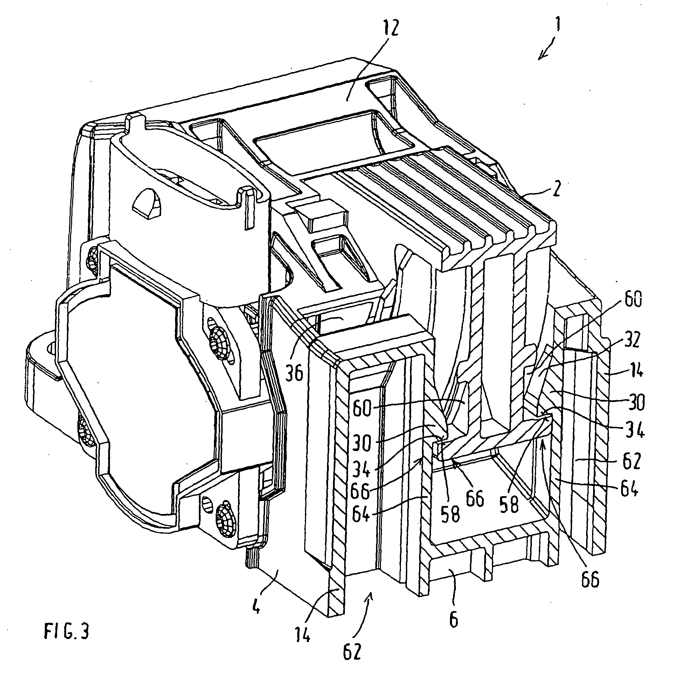

Allgemein sind im Bereich des Pedalhebelanschlags 58 und/oder des Lagerbockanschlags 30 derartige Elastizitäten vorhanden, dass während der um die Schwenkachse 20 ausgeführten Relativdrehbewegung zwischen dem Pedalhebel 2 und dem Lagerbock 4 zur Herstellung der Schwenkverbindung der Pedalhebelanschlag 58 am Lagerbockanschlag 30 bedingt durch elastische Verformungen vorbeigleitet und ihn nach Rückfederung hintergreift. Da im vorliegenden Fall die Breite des Pedalhebels 2 in etwa dem Abstand der beiden Wangen 14 entspricht und die als Lagerbockanschläge fungierenden Keile 30 von den pedalhebelseitigen Anschlagkanten 58 im Laufe der Relativdrehung zur Herstellung der Schwenkverbindung passiert werden müssen, sind die Wandungen der Wangen 14 im Bereich der Keile 30 doppelwandig ausgeführt, wodurch sie Hohlräume 62 aufweisen, wie in Fig.3 gezeigt ist. Weiterhin sind die Keile 30 dünnen Streifen 64 angeformt, welche durch Schlitze von der übrigen Wandung getrennt sind. Hierdurch können die Keile 30 bedingt durch elastische Verformungen der Streifen 64 in die Hohlräume 62 zurückweichen, wenn die Anschlagkanten 58 entlang der sich in Richtung der zur Herstellung der Schwenkverbindung vorgesehenen Relativdrehbewegung allmählich erweiternden Keilflächen 32 gleiten. Die elastische Verformung der Wangen 14 findet folglich hauptsächlich in dem lokal begrenzten Bereich der Streifen 64 statt, fern von den Lagerflächen 18, 22, 28 bzw. 50, 54 der Schwenkverbindung.

Da der Pedalhebel 2 am Lagerbock 4 insbesondere durch die Ringabschnitt-Ringnut-Paarungen 26, 54 zwangsgeführt ist und keine andere Bewegung als eine Drehung um die Schwenkachse 20 ausführen kann, ist er vorteilhaft abgestützt und kann nicht in andere Richtungen ausweichen. Der während des Einschiebens der Ringabschnitte 54 des Pedalhebels 2 in die Einführungsschlitze 24 des Lagerbocks 4 zuerst mit den Ringnuten 26 in Eingriff kommende Teil fungiert folglich anfangs als Zwangsführung zur Montageerleichterung bei der Überwindung der durch die elastischen Verformungen bedingten Kräfte. Der Pedalhebel 2 ist folglich an dem Lagerbock 4 mittels der Lagerflächen 18, 22, 28 bzw. 50, 54 der Schwenkverbindung bereits abgestützt, bevor die Pedalanschläge 58 an den Lagerbockanschlägen 30 vorbeigleiten.

Anstatt nur die Bereiche elastisch auszubilden, welchen die Keile 30 angeformt sind, könnten zusätzlich auch die Keile 30 selbst und/oder die Anschlagkanten 58 elastisch ausgebildet werden. Entscheidend ist lediglich, dass die Keile 30 und die Anschlagkanten einander passieren können. Denkbar sind beispielsweise auch in den Wangen 14 geführte und federvorgespannte Keile 30 als separate Bauteile.

Wenn die Anschlagkanten 58 im Rahmen der weiteren Relativdrehung die Keile 30 vollständig passiert haben, treten die Keile 30 durch Rückfederung der Streifen 64 wieder aus den Hohlräumen 62 hervor, wobei - ähnlich wie bei einem Schnappverschluss ― die endseitigen Stufen 34 der Keile 30 die zugeordneten Anschlagkanten 58 hintergreifen und die Keile 30 in die seitlich eingezogenen Bereiche 60 mit Spiel hineinragen, wie in Fig.3 gezeigt ist. Damit ist die Schwenkverbindung zwischen dem Pedalhebel 2 und dem Lagerbock 4 fertiggestellt und der Pedalhebel 2 kann die erforderlichen Schwenkbewegungen ohne Behinderung ausführen. Die Rückstellfederelemente 10 werden während der in Richtung des schließenden Schnappverschlusses vollzogenen Relativdrehbewegung zusammengepreßt und üben eine Rückstellkraft auf den Pedalhebel 2 aus. Nach Fertigstellung der Schnappverbindung schlagen folglich die Stufen 34 der Keile 30 an den Anschlagkanten 58 in entgegengesetzter Drehrichtung an und sorgen für einen Formschluss, welcher verhindert, dass die Anschlagkanten 58 die vorspringenden Stufen 34 der Keile 30 wieder passieren und die einmal fertig gestellte Schwenkverbindung wieder aufgelöst wird, wie insbesondere anhand der Schnittdarstellung von Fig.3 leicht vorstellbar ist. Der Schnappverschluss bildet folglich einen Bestandteil der Schwenkverbindung, ohne den sie nicht fertiggestellt wäre. Falls erforderlich, kann jedoch die Schwenkverbindung bzw. der Schnappverschluss durch Aufspreizen der beiden Wangen 14 des Lagerbocks wieder gelöst werden, wozu allerdings geeignetes Werkzeug notwendig ist. Im fertig montierten Zustand ist folglich der Pedalhebelanschlag 58 gegen den Lagerbockanschlag 30 entgegen einer Pedalbetätigungsrichtung federnd vorgespannt, wobei der Pedalanschlag 58 und der Lagerbockanschlag 30 zusammen einen Leerlaufanschlag 66 des Fahrpedalmoduls 1 bilden, so dass sich der Pedalhebel 2 gemäß der in Fig.3 gezeigten Lage in Leerlaufstellung befindet.

Ein Vollastanschlag 68 des Fahrpedalmoduls 1 beinhaltet auf Seiten des Lagerbocks 4 einen planen Abschnitt 70 der Bodenplatte 6, der einem nach unten leicht auskragenden Abschnitt 72 des Pedalhebels 2 gegenüberliegt und diesen bei voll niedergerücktem Pedalhebel 2 kontaktiert, wie anhand von Fig.2 leicht vorstellbar ist. Die eingezogenen Bereiche 60 des Pedalhebels haben in Umfangsrichtung der Drehbewegung gesehen eine Erstreckung, welche die gesamte Pedalhebelbewegung zwischen Leerlauf- und Vollastanschlag 66, 68 umfasst. Durch Betätigung des Pedalhebels 2 wird außerdem der Mitnehmer 56 entlang der teilkreisbogenförmigen Durchbrechung 38 der Wange 14 des Lagerbocks 4 bewegt, wobei er den Drehhebel des Schleifrings des Potentiometers mitnimmt, welches daraufhin vom Betätigungsweg abhängige elektrische Signale für das Motorsteuergerät erzeugt.

Angesichts der obigen Ausführungen ist klar, dass die Schwenkverbindung zwischen dem Pedalhebel 2 und dem Lagerbock 4 durch eine einzige Drehbewegung um eine Schwenkachse 20 zustande kommt, wobei diese Schwenkbewegung gleichzeitig den Schnappverschluss herstellt, welcher zugleich als Leerlaufanschlag 66 fungiert.

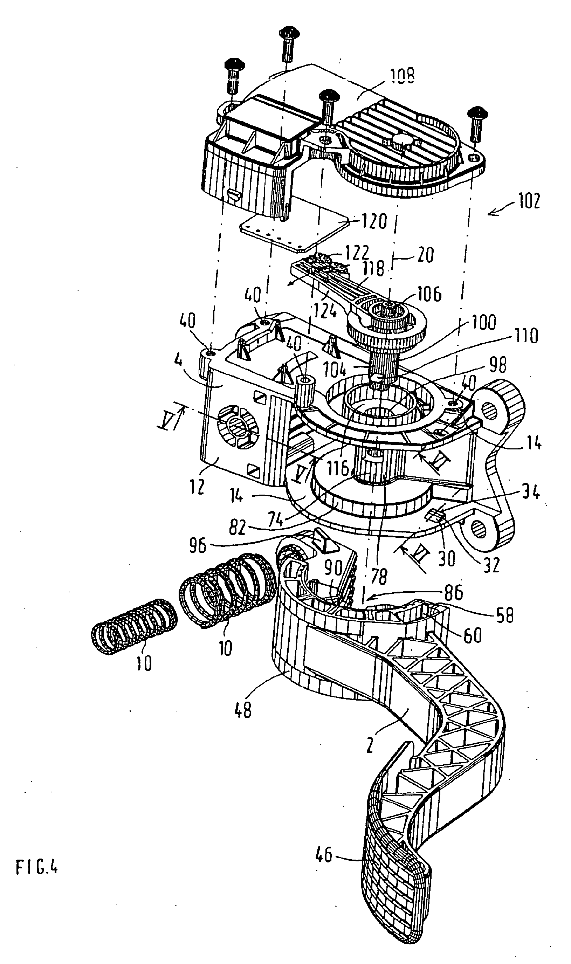

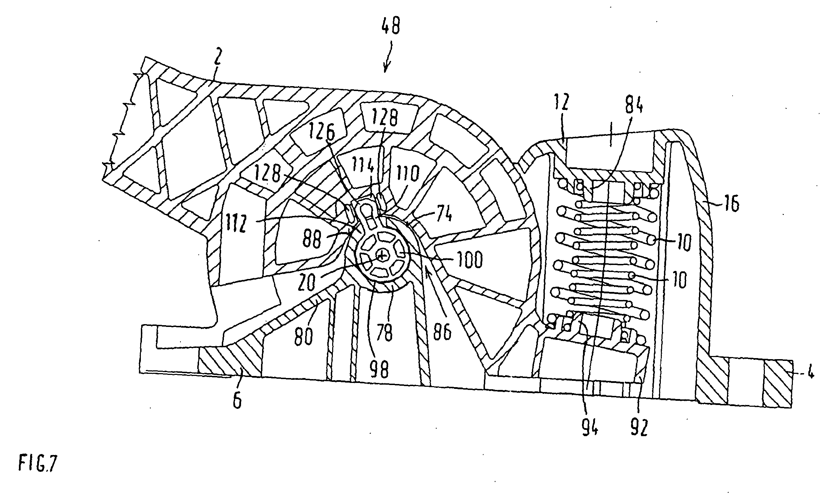

Bei dem zweiten Ausführungsbeispiel der Erfindung nach den Fig.4 bis 6 sind die gegenüber dem vorhergehenden Beispiel gleichbleibenden und gleichwirkenden Teile durch die gleichen Bezugszeichen gekennzeichnet. Im Unterschied zu diesem wird die zentrale Lagerfläche des Lagerbocks 4 durch die radial äußere Umfangsfläche 74 eines mit der Schwenkachse 20 der Schwenkverbindung koaxialen Hohlzapfens 78 gebildet, welcher auf einem von der Bodenplatte 6 nach oben weg ragenden Vorsprung 80 gehalten ist, wie am besten in Fig.7 zu sehen ist. Der Hohlzapfen 78 erstreckt sich zwischen den Wangen 14 des Lagerbocks 4 und ist, ohne dass ihn eine Querwand verdecken würde, von oben her frei zugängig (Fig.4). Wie beim vorangehend beschriebenen Ausführungsbeispiel sind an den Wangen 14 zueinander weisende Keile 30 entfernt von der durch den Hohlzapfen 78 gebildeten Lagerfläche angeordnet. Die Wangen 14 weisen im Bereich der Keile 30 eine relativ geringe Wandstärke auf, wodurch eine seitliche Nachgiebigkeit gegeben ist.

Neben dem Hohlzapfen 78 sind am Lagerbock 4 jeweils an die zugeordnete Wange 14 angrenzend zwei weitere Lagerflächen in Form von Teilzylinderflächen 82 größeren Durchmessers ausgebildet, von welchen in Fig.4 lediglich eine sichtbar ist. In dem bezogen auf die Lagerbockanschläge 30 jenseits des Hohlzapfens 78 angeordneten Quersteg 12 ist eine Aufnahme für Rückstellfederelemente 10, bestehend aus zwei ineinander gesteckten Schraubenfedern in Form eines Zentrierzapfens 84 ausgebildet, an welchem die Schraubenfederenden aufgenommen sind, wie Fig.7 zeigt.

Ebenfalls aus Fig.7 geht hervor, dass der zylinderförmige Pedalhebelkopf 48 eine kreissektorförmige Ausnehmung 86 aufweist, welche in beispielsweise drei mit der Schwenkachse 20 koaxiale teilzylindrische Lagerflächen mündet. Diese Lagerflächen beinhalten eine zentrale, mit dem Hohlzapfen 78 durchmessergleiche Lagerfläche 88 sowie in axialer Richtung gesehen an deren Enden je eine weitere Lagerfläche 90 größeren Durchmessers, der dem Durchmesser der beiden äußeren Lagerflächen 82 des Lagerbocks 4 entspricht. Weiterhin ist der Pedalhebelkopf 48 mit einem sich in Pedalhebellängsrichtung erstreckenden Fortsatz 92 versehen, welcher eine Aufnahme für die Rückstellfederelemente 10 in Form eines weiteren Zentrierzapfens 94 trägt, wie am besten anhand von Fig.7 zu sehen ist. In Fig.4 ist außerdem der seitlich eingezogene Bereich 60 des Pedalhebels 2 sichtbar, der von der Anschlagkante 58 begrenzt ist.

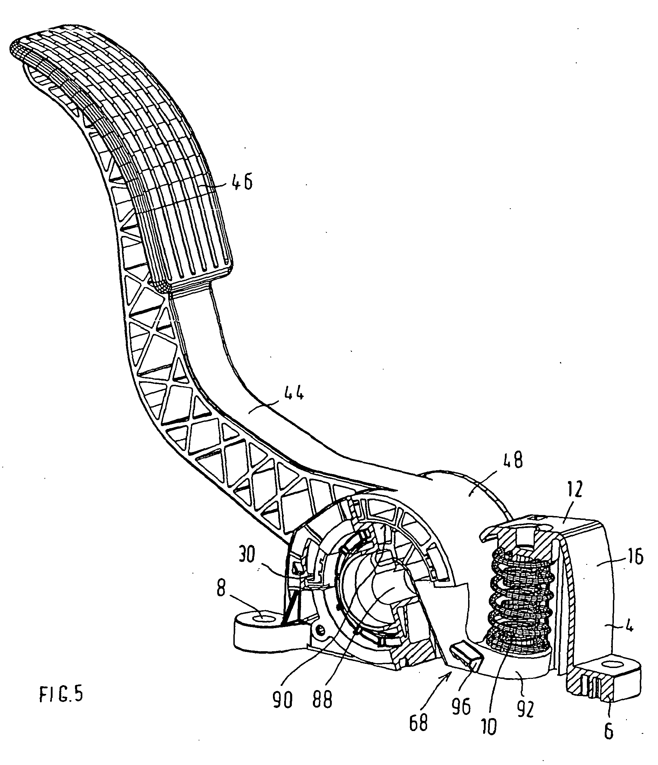

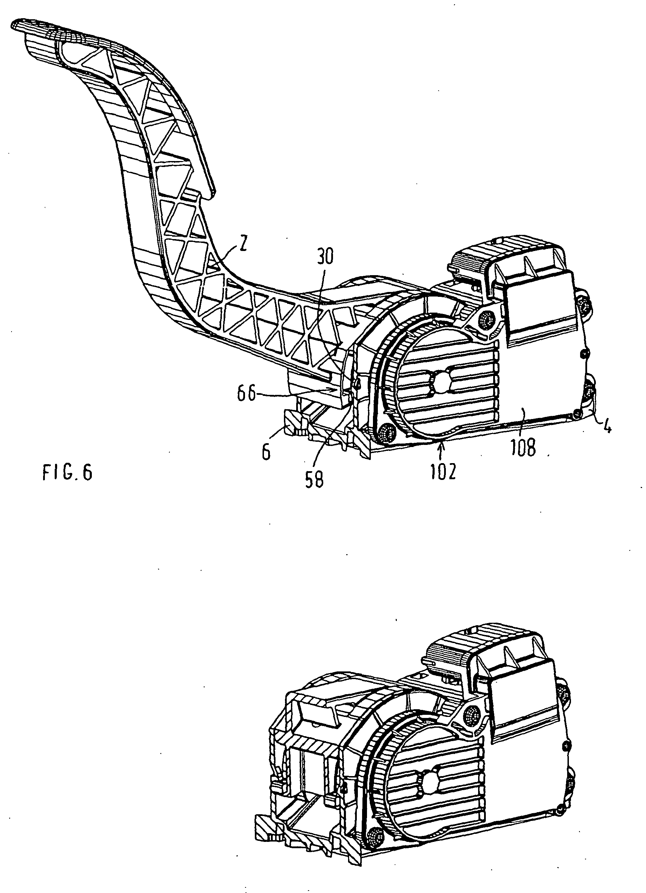

Zur Herstellung der Schwenkverbindung wird der Pedalhebel 2 mit seinen drei teilzylindrischen Lagerflächen 88, 90 über die radiale Ausnehmung 86 auf die zugeordneten Lagerflächen 74, 82 des Lagerbocks 4 gesetzt. Gleichzeitig werden die Rückstellfederelemente 10 auf den Zentrierzapfen 84, 94 platziert, wozu sie zusammengedrückt werden müssen. Die aufgrund der Längenänderung der Rückstellfederelemente 10 erzeugte Druckkraft sorgt dafür, dass der Pedalhebel 2 am Lagerbock 4 gehalten und die einander zugeordneten Lagerflächen 88, 90 bzw. 74, 82 gegeneinander vorgespannt sind. Die Anschlagkanten 58 des Pedalhebels 2 befinden sich dabei in einer Position, in welcher sie die Keile 30 noch nicht passiert haben. Aus dieser Lage wird nun der Pedalhebel 2 bezogen auf die Darstellung von Fig.6 gegen den Uhrzeigersinn verdreht, wobei die Anschlagkanten 58 entlang der ansteigenden Keilflächen 32 der Keile 30 gleiten und die Wangen 14 unter elastischer Verformung nach außen ausweichen. Nachdem die Anschlagkanten 58 die Stufen 34 der Keile 30 passiert haben, federn die Wangen 14 nach innen zurück und die Anschlagkanten 58 hintergreifen die Stufen 34 der Keile 30, wie beim vorangehenden Ausführungsbeispiel beschrieben. Auch bilden die Anschlagkanten 58 zusammen mit den zugeordneten Keilen 30 den Leerlaufanschlag 66 des Fahrpedalmoduls 1 sowie einen Schnappverschluss der durch die Drehbewegung zustande gekommenen Schwenkverbindung. In Fig.5 ist außerdem ein vom Fortsatz 92 des Pedalhebelkopfes 48 seitlich weg ragender Keil 96 erkennbar, welcher an einem nicht dargestellten Anschlag des Lagerbocks 4 in Votiaststellung des Pedalhebels 2 anschlägt und sich bereits durch Aufsetzen des Pedalhebels 2 auf den Lagerbock 4 in Arbeitsposition befindet, ohne dass hierzu eine Relativdrehbewegung notwendig wäre. Der Keil 96 am Pedalhebel 2 und der zugeordnete Anschlag am Lagerbock 4 bilden zusammen daher einen Vollastanschlag des Fahrpedalmoduls.

Bei beiden Ausführungsformen spannen die Rückstellfederelemente 10 die einander zugeordneten Lagerflächen 18, 22, 50, 54 (Fig.1 bis Fig.3) bzw. 74, 82, 88, 90 (Fig.4 bis Fig.7) gegeneinander. Folglich entsteht in der Schwenklagerung ein gegen die Betätigungsbewegung gerichtetes Reibmoment, welches unter anderem vom Reibungskoeffizienten der Lagerflächen und dem Durchmesser der Lagerflächen abhängt. Hierdurch wird wie bei Fahrpedalen mit rein mechanischen Übertragungsmitteln eine Reibhysterese erzeugt, welche sich vorteilhaft auf das Fahrgefühl auswirkt. Vorzugsweise werden wenigstens einige der Lagerflächen 18, 22, 50, 54 (Fig.1 bis Fig.3) bzw. 74, 82, 88, 90 (Fig.4 bis Fig.7) mit einem geeigneten Reibbelag versehen, was bei der Herstellung des Spritzgußformlings beispielsweise durch Einlegen in die Form geschehen kann, so dass der Reibbelag bereits in die Lagerfläche 18, 22, 50, 54 (Fig.1 bis Fig.3) bzw. 74, 82, 88, 90 (Fig.4 bis Fig.7) integriert ist. Dann besteht das Fahrpedalmodul 1 gemäß der vorangehend beschriebenen Ausführungsformen lediglich aus 4 unterschiedlichen Bauteilen, nämlich dem Pedalhebel 2, dem Lagerbock 4, dem Sensor 102 und den Rückstellfederelementen 10.

Der als Hohlzapfen 78 ausgeführte Zapfen ist mit dem Lagerbock 4 und insbesondere mit dessen Bodenplatte 6 einstückig ausgeführt und weist eine zur Schwenkachse 20 koaxiale Lagerbohrung 98 für eine Sensorwelle 100 eines vorzugsweise als Drehpotentiometer ausgebildeten Drehsenors 102 in Form einer Sacklochbohrung auf, in welcher zumindest ein Teil der Sensorwelle 100 unmittelbar, d.h. ohne Zwischenordnung von Lagerbuchsen drehbar gelagert ist, wie aus Fig.7 hervorgeht. Folglich ist die Sensordrehachse koaxial mit der Schwenkachse 20 der Schwenkverbindung zwischen dem Pedalhebel 2 und dem Lagerbock 4. Vorzugsweise ist ein Endabschnitt 104 der Sensorwelle 100 in der Lagerbohrung 98 aufgenommen, während der andere Endabschnitt 106 der Sensorwelle 100 in einem am Lagerbock 4 beispielsweise mittels Schrauben an der zugeordneten Aufnahme 40 befestigten Senorgehäuse 108 drehgelagert ist, wie am besten die Explosionszeichnung von Fig.4 zeigt.

Die innerhalb des Hohlzapfens 78 drehgelagerte Sensorwelle 100 und der auf dem Hohlzapfen 78 drehgelagerte Pedalhebelkopf 48 sind durch einen Mitnehmer 110 unmittelbar miteinander drehgekoppelt, um die Drehbewegungen des Pedalhebels 2 im wesentlichen spielfrei und linear auf die Sensorwelle 100 zu übertragen. Dies kann beispielsweise dadurch realisiert sein, dass ein von der Sensorwelle 100 radial weg ragender Mitnehmerstift 110 einen Schlitz 112 in der Wandung des Hohlzapfens 78 durchragt und in einer Aufnahme 114 in der zentralen Lagerfläche 88 des Pedalhebelkopfes 48 unmittelbar aufgenommen ist. Der Schlitz 112 besitzt eine Erstreckung in Umfangsrichtung, welche eine ungehinderte Bewegung des Pedalhebels 2 zwischen dem Leerlaufanschlag 66 und dem Vollastanschlag erlaubt. Damit der Sensorhebel 2 trotz des radial weg ragenden Mitnehmerstifts 110 seitlich in die Lagerbohrung 98 des Hohlzapfens 78 eingesetzt werden kann, erstreckt sich der Schlitz 112 in Richtung der Schwenkachse 20 gesehen bis an das Ende des Hohlzapfens 78, welches dem Sensorgehäuse 108 gegenüberliegt. Weiterhin hat die zum Sensorgehäuse 108 weisende Wange 14 des Lagerbocks 4 ein mit der Sensorwelle 100 koaxiales Durchgangsloch 116, so dass die Sensorwelle 100 durch einfaches seitliches Einschieben in die Lagerbohrung 98 unter gleichzeitigem Fluchten des Mitnehmerstifts 110 mit dem Schlitz 112 montierbar ist.

Von der Sensorwelle 100 ragt ein mit ihr vorzugsweise einstückiger Sensorhebel 118 weg, welcher an seinem freien Ende mit einer Sensorplatte 120 zugewandten Schleifkontakten 122 eines Schleifers 124 versehen ist. Durch Drehung des Schleifers 124 relativ zur Sensorplatte 120 können in bekannter Weise stufenlos Widerstandswerte eingestellt werden.

Der Querschnitt des Mitnehmerstifts 110 ist vorzugsweise gegenüber seinem durch den Schlitz 112 der Wandung des Hohlzapfens 78 durchragenden Tei! an seinem Kopf 126 etwas erweitert und greift in die Aufnahme 114 in der zentralen Lagerfläche 88 des Pedalhebelkopfes 48 ein. Diese Aufnahme ist vorzugsweise durch eine radial verlaufendes Sackloch 114 gebildet, dessen Querschnitt etwas kleiner als der Querschnitt des Kopfes 126 des Mitnehmerstifts 110 ausgebildet ist. Dann ist der Mitnehmerstift 110 in der Aufnahme 114 unter Vorspannung umgriffen, wenn beispielsweise wenigstens eine Seitenwand des Sacklochs 114 sich beim Einführen des Mitnehmerstifts 110 elastisch verformen kann. Im vorliegenden Fall sind zwei einander gegenüberliegende Seitenwände des Sacklochs 114 unter Bildung je eines Hohlraums 128 doppelwandig ausgeführt, wie aus Fig.7 hervorgeht. Dann kann die vorzugsweise dünn ausgeführte Seitenwand des Sacklochs 114 unter elastischer Verformung seitlich nachgeben, wenn der im Querschnitt erweiterte Kopf 126 des Mitnehmerstifts 110 eingesteckt wird. Selbstverständlich kann der Mitnehmerstift 110 anstatt mit der Sensorwelle 100 auch mit dem Pedalhebel 2 verbunden und vorzugsweise mit diesem einstückig ausgeführt und in einer in der Sensorwelle 100 ausgebildeten Aufnahme aufgenommen sein.

## Patentansprüche

1. Fahrpedalmodul (1) zum Steuern der Leistung einer Antriebsmaschine, insbesondere einer Brennkraftmaschine eines Fahrzeugs, mit einem mittels einer Schwenkverbindung an einem Lagerbock (4) um eine Schwenkachse (20) drehbar gehaltenen Pedalhebel (2), der mit wenigstens einem Pedalhebelanschlag (58) gegen einen zugeordneten Lagerbockanschlag (30) anschlagbar ist, **dadurch gekennzeichnet, dass** im Bereich des Pedalhebelanschlags (58) und/oder des Lagerbockanschlags (30) derartige Elastizitäten vorhanden sind, dass während einer um die Schwenkachse (20) ausgeführten Relativdrehbewegung zwischen dem Pedalhebel (2) und dem Lagerbock (4) zur Herstellung der Schwenkverbindung der Pedalhebelanschlag (58) am Lagerbockanschlag (30) bedingt durch elastische Verformungen vorbeigleitet und ihn nach Rückfederung hintergreift.

2. Fahrpedalmodul nach Anspruch 1, **dadurch gekennzeichnet, dass** der Pedalhebelanschlag (58) und der Lagerbockanschlag (30) eine Geometrie aufweisen, welche eine Auflösung der fertig gestellten Schwenkverbindung verhindert.

3. Fahrpedalmodul nach Anspruch 2, **dadurch gekennzeichnet, dass** zumindest der Lagerbockanschlag wenigstens einen in Richtung der Schwenkachse vorspringenden Keil (30) mit einer in eine Stufe (34) mündenden Keilfläche (32) aufweist, wobei die Keilfläche (32) in Richtung der zur Herstellung der Schwenkverbindung vorgesehenen Relativdrehbewegung und die Stufe (34) in Gegenrichtung wirksam ist.

4. Fahrpedalmodul nach Anspruch 3, **dadurch gekennzeichnet, dass** der Pedalanschlag durch wenigstens eine der Stufe (34) des Keils (30) zugeordnete Anschlagkante (58) gebildet wird, welche einen in Richtung der Schwenkachse (20) eingezogenen Bereich (60) begrenzt, in welchem der Keil (30) nach Fertigstellung der Schwenkverbindung mit Spiel geführt ist.

5. Fahrpedalmodul nach Anspruch 4, **dadurch gekennzeichnet, dass** der Pedalhebelanschlag (58) mit dem Pedalhebel (2) und der Lagerbockanschlag (30) mit dem Lagerbock (4) einstückig ausgeführt ist.

6. Fahrpedalmodul nach Anspruch 5, **dadurch gekennzeichnet, dass** der Lagerbock (4) zwei mit Abstand parallel zueinander angeordnete Wangen (14) aufweist, zwischen welchen der Pedalhebel (2) geführt ist und welche mit zwei zueinander weisenden, vorspringenden Lagerbockanschlägen (30) versehen sind.

7. Fahrpedalmodul nach Anspruch 6, **dadurch gekennzeichnet, dass** die Wangen (14) des Lagerbocks (4) im Bereich der Lagerbockanschläge (30) eine seitliche Elastizität aufweisen.

8. Fahrpedalmodul nach Anspruch 7, **dadurch gekennzeichnet, dass** die Elastizität entfernt von Lagerflächen (18, 22, 50, 54; 74, 82, 88, 90) der Schwenkverbindung vorgesehen ist.

9. Fahrpedalmodul nach Anspruch 8, **dadurch gekennzeichnet, dass** der Pedalhebel (2) an dem Lagerbock (4) über die Lagerflächen (18, 22, 50, 54; 74, 82, 88, 90) der Schwenkverbindung abstützbar ist, bevor der Pedalhebelanschlag (58) an dem Lagerbockanschlag (30) vorbeigleitet.

10. Fahrpedalmodul nach Anspruch 9, **dadurch gekennzeichnet, dass** die Lagerflächen der Schwenkverbindung wenigstens einen, dem Pedalhebel (2) angeformten und sich über einen Teilkreis erstreckenden Ringabschnitt (54) beinhalten, welcher in eine dem Lagerbock (4) angeformte und sich ebenfalls über einen Teilkreis erstreckende Ringnut (26) einführbar ist.

11. Fahrpedalmodul nach Anspruch 9, **dadurch gekennzeichnet, dass** die Lagerflächen der Schwenkverbindung einen mit der Schwenkachse (20) koaxialen, dem Lagerbock (4) zugeordneten Zapfen (78) aufweisen, auf welchen wenigstens eine teilzylindrische Lagerfläche (88, 90) des Pedalshebels (2) aufsetzbar ist.

12. Fahrpedalmodul nach einem der vorhergehenden Ansprüche, **dadurch gekennzeichnet, dass** der Pedalhebelanschlag (58) und der Lagerbockanschlag (30) zusammen einen Leerlaufanschlag (66) bilden.

13. Fahrpedalmodul nach einem der vorhergehenden Ansprüche, **dadurch gekennzeichnet, dass** der Pedalhebelanschlag (58) gegen den Lagerbockanschlag (30) entgegen einer Pedalbetätigungsrichtung federnd vorgespannt ist.

## Claims

1. Accelerator pedal module (1) for controlling the power of a drive engine, in particular an internal combustion engine of a vehicle, having a pedal lever (2) which is held so as to be rotatable about a pivot axis (20) by means of a pivot connection to a bearing bracket (4) and can, by means of at least one pedal lever stop (58), come to bear against an associated bearing bracket stop (30), **characterized in that** in the region of the pedal lever stop (58) and/or of the bearing bracket stop (30), there are elasticities such that during a relative rotational movement about the pivot axis (20) between the pedal lever (2) and the bearing bracket (4), in order to produce the pivot connection, the pedal lever stop (58) slides past the bearing bracket stop (30) on account of elastic deformation and engages behind the latter after it springs back.

2. Accelerator pedal module according to Claim 1, **characterized in that** the pedal lever stop (58) and the bearing bracket stop (30) have a geometry which prevents disconnection of the established pivot connection.

3. Accelerator pedal module according to Claim 2, **characterized in that** at least the bearing bracket stop has at least one wedge (30) which projects in the direction of the pivot axis and has a wedge face (32) which opens out into a step (34), the wedge face (32) being effective in the direction of the relative rotational movement which is provided to produce the pivot connection, and the step (34) being effective in the opposite direction.

4. Accelerator pedal module according to Claim 3, **characterized in that** the pedal stop is formed by means of at least one stop edge (58) which is associated with the step (34) of the wedge (30) and delimits a region (60) which narrows in the direction of the pivot axis (20) and in which the wedge (30) is guided with play once the pivot connection has been established.

5. Accelerator pedal module according to Claim 4, **characterized in that** the pedal lever stop (58) is formed in one piece with the pedal lever (2) and the bearing bracket stop (30) is formed in one piece with the bearing bracket (4).

6. Accelerator pedal module according to Claim 5, **characterized in that** the bearing bracket (4) has two cheeks (14) which are arranged parallel to and at a distance from one another, between which the pedal lever (2) is guided, and which are provided with two projecting bearing bracket stops (30) which point towards one another.

7. Accelerator pedal module according to Claim 6, **characterized in that** the cheeks (14) of the bearing bracket (4) have lateral elasticity in the region of the bearing bracket stops (30).

8. Accelerator pedal module according to Claim 7, **characterized in that** the elasticity is provided at a remote distance from the bearing faces (18, 22, 50, 54; 74, 82, 88, 90) of the pivot connection.

9. Accelerator pedal module according to Claim 8, **characterized in that** the pedal lever (2) can rest on the bearing bracket (4) by means of the bearing faces (18, 22, 50, 54; 74, 82, 88, 90) of the pivot connection before the pedal lever stop (58) slides past the bearing bracket stop (30).

10. Accelerator pedal module according to Claim 9, **characterized in that** the bearing faces of the pivot connection comprise at least one annular section (54) which is integrally formed on the pedal lever (2), extends over part of a circle and can be inserted into an annular groove (26) which is integrally formed on the bearing bracket (4) and likewise extends over part of a circle.

11. Accelerator pedal module according to Claim 9, **characterized in that** the bearing faces of the pivot connection have a journal (78) which is coaxial with respect to the pivot axis (20), is associated with the bearing bracket (4) and on which at least one partially cylindrical bearing face (88, 90) of the pedal lever (2) can be placed.

12. Accelerator pedal module according to one of the preceding claims, **characterized in that** the pedal lever stop (58) and the bearing bracket stop (30) together form an idle stop (66).

13. Accelerator pedal module according to one of the preceding claims, **characterized in that** the pedal lever stop (58) is spring-loaded against the bearing bracket stop (30), counter to an operation direction of the pedal.

## Revendications

1. Module de pédale d'accélérateur (1) permettant de commander la performance d'un moteur d'entraînement, en particulier d'un moteur à combustion interne d'un véhicule, comportant un levier de pédale retenu sur un support de palier (4) de façon pivotante (2) autour d'un axe de pivotement (20) à l'aide d'une liaison de pivotement venant en butée avec au moins une butée de levier de pédale (58) contre une butée de support de palier associée (30),
**caractérisé en ce que**
de telles élasticités ne sont disponibles dans la zone de la butée de levier de pédale (58) et/ou de la butée de support de palier (30), que pendant un mouvement de rotation relatif réalisé autour de l'axe de pivotement (20) entre le levier de pédale (2) et le support de palier (4) pour produire la liaison de pivotement, la butée de levier de pédale (58) passe en glissant sur la butée de support de palier (30) en raison des déformations élastiques et l'engage par l'arrière après le retour élastique.

2. Module de pédale d'accélérateur selon la revendication 1,
**caractérisé en ce que**
la butée de levier de pédale (58) et la butée de support de palier (30) présentent une géométrie qui empêche que la liaison de pivotement achevée ne se défasse.

3. Module de pédale d'accélérateur selon la revendication 2,
**caractérisé en ce qu'**
la butée de support de palier présente au moins une clavette (30) faisant saillie en direction de l'axe de pivotement avec une surface de clavetage (32) débouchant dans un étage (34), la surface de clavetage (32) agissant en direction du mouvement de rotation relatif prévu pour produire la liaison de pivotement, et l'étage (34) agit dans un sens inverse.

4. Module de pédale d'accélérateur selon la revendication 3,
**caractérisé en ce que**
la butée de pédale est formée par au moins une arête de butée (58) associée à l'étage (34) de la clavette (30), qui limite une zone rentrée (60) en direction de l'axe de pivotement (20), dans lequel la clavette (30) est guidée avec un jeu après l'achèvement de la liaison de pivotement.

5. Module de pédale d'accélérateur selon la revendication 4,
**caractérisé en ce que**
la butée de levier de pédale (58) est réalisée d'un seul tenant avec le levier de pédale (2) et la butée de support de palier (30) avec le support de palier (4).

6. Module de pédale d'accélérateur selon la revendication 5,
**caractérisé en ce que**
le support de palier (4) présente deux joues agencées à distance parallèlement l'une à l'autre (14), entre lesquelles le levier de pédale (2) est guidé et elles sont munies de deux butées de support de palier (30) tournées l'une vers l'autre et faisant saillie.

7. Module de pédale d'accélérateur selon la revendication 6,
**caractérisé en ce que**
les joues (14) du support de palier (4) présentent une élasticité latérale dans la zone de la butée de support de palier (30).

8. Module de pédale d'accélérateur selon la revendication 7,
**caractérisé en ce que**
l'élasticité est prévue loin des surfaces de logement (18, 22, 50, 54 ; 74, 82, 88, 90) de la liaison de pivotement.

9. Module de pédale d'accélérateur selon la revendication 8,
**caractérisé en ce que**
le levier de pédale (2) peut appuyer sur le support de palier (4) par les surfaces de logement (18, 22, 50, 54 ; 74, 82, 88, 90) de la liaison de pivotement, avant que la butée de levier de pédale (58) ne passe en glissant sur la butée de support de palier (30).

10. Module de pédale d'accélérateur selon la revendication 9,
**caractérisé en ce que**
les surfaces de logement de la liaison de pivotement contiennent une section annulaire (54) rapportée par moulage au levier de pédale (2) et s'étendant sur un cercle primitif, laquelle section annulaire peut être introduite dans une rainure annulaire (26) rapportée par moulage au support de palier (4) et s'étendant également sur un cercle primitif.

11. Module de pédale d'accélérateur selon la revendication 9,
**caractérisé en ce que**
les surfaces de logement de la liaison de pivotement présentent un tourillon (78) coaxial avec l'axe de pivotement (20) et associé au support de palier (4) sur lequel au moins une surface de logement de cylindre primitif de référence (88, 90) du levier de pédale (2) peut être posée.

12. Module de pédale d'accélérateur selon l'une quelconque des revendications précédentes,
**caractérisé en ce que**
la butée de levier de pédale (58) et la butée de support de palier (30) forment ensemble une butée de ralenti (66).

13. Module de pédale d'accélérateur selon l'une quelconque des revendications précédentes,
**caractérisé en ce que**
la butée de levier de pédale (58) est précontrainte de manière élastique en sens inverse de la direction d'actionnement de la pédale contre la butée de support de palier (30).
